# EUROPEAN PATENT APPLICATION

(11) **EP 2 001 115 A2**
(43) Date of publication of application: **10.12.2008**
(21) Application number: 08100280.0
(22) Date of filing: 09.01.2008
(51) Int. Cl.: H02M 3/335

(54) **Switched-mode power supply quasi-resonant converter, switch control circuit controlling switching operations of switched-mode power supply quasi-resonant converter, and input signal processing circuit connected to control integrated circuit of switch control circuit**

(30) Priority: 07.06.2007 KR 20070055681
(71) Applicant: Samsung Electronics Co., Ltd., Suwon-si, Gyeonggi-do 442-742 (KR)
(72) Inventor: Na, Tae-Kwon, Seoul (KR)
(74) Representative: Davies, Robert Ean

(57) **Abstract**

Disclosed is a Switched-Mode Power Supply (SMPS) quasi-resonant converter, a switch control circuit controlling switching operations of the SMPS quasi-resonant converter, and an input signal processing circuit connected to a control Integrated Circuit (IC) of the switch control circuit (220). The SMPS quasi-resonant converter includes a switch (S) and the switch control circuit (220). The switch control circuit includes a control integrated circuit (IC) (230) to control operation of the switch; a Zener diode (240) connected to an input terminal of the control IC; and a diode (250) connected in series with the Zener diode.

## Description

Aspects of the invention relate to a Switched-Mode Power Supply (SMPS) quasi-resonant converter, a switch control circuit to control a switching operation of the SMPS quasi-resonant converter, and an input signal processing circuit connected to a control integrated circuit (IC) of the switch control circuit.

A Switched-Mode Power Supply (SMPS) is an apparatus for obtaining a controlled direct current (DC) output voltage through a filter after converting a DC input voltage into a square-wave voltage by using a semiconductor device such as a power transistor as a switch. A SMPS quasi-resonant converter controls ON and OFF operations of a switch by using a control signal. The control of the ON and OFF operations is achieved by using a waveform of a voltage that is applied to the switch of the SMPS quasi-resonant converter.

In general, a device such as a computer, a printer, a photocopy machine, a monitor, or a communication terminal requires an efficient power supply system that has a simple structure and a small size, and can provide a stable power supply. Accordingly, such a device employs the SMPS, which has a high efficiency, a small size, and a light weight since the SMPS controls current flow by using a switching operation of a semiconductor device, as compared to a stable power supply system of the related art that uses a transformer.

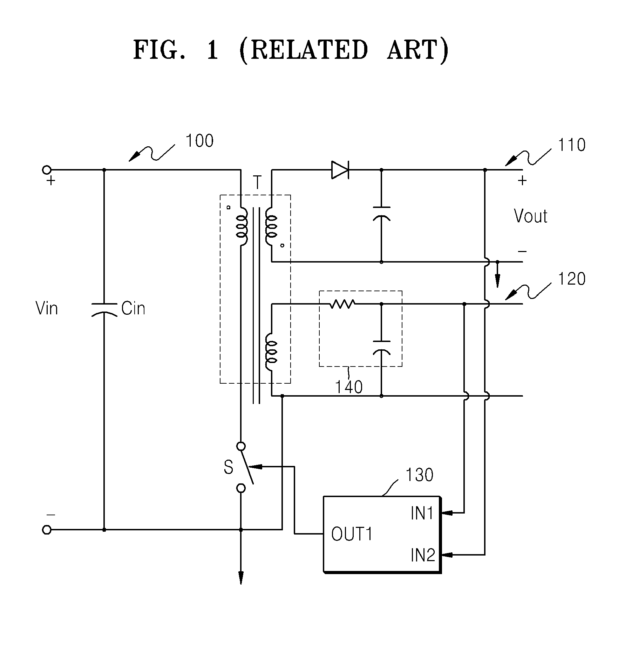

FIG. 1 is a circuit diagram of a SMPS quasi-resonant converter of the related art. The circuit shown in FIG. 1 is known as a flyback converter, which is a type of a DC/DC converter.

Referring to FIG. 1, the SMPS converter includes a transformer T having a predetermined turns ratio, a first circuit 100 connected to a primary coil of the transformer that is an input-side coil, a second circuit 110 connected to a secondary coil of the transformer T that is an output-side coil, and a sub-winding circuit 120 of the input-side coil.

The first circuit 100 includes a switch S connected in series between the primary coil of the transformer T and a ground terminal. The switch S controls energy charging and transmitting operations of the transformer T by switching an input voltage in response to a control signal provided by a control integrated circuit (IC) 130.

The control IC 130 controlling the operation of the switch of the SMPS quasi-resonant converter receives a feedback signal from the second circuit 110 through an input terminal IN 2, and receives a signal synchronized with a waveform of a voltage that is applied to the switch S from the sub-winding circuit 120 through an input terminal IN 1.

The control IC 130 generates a control signal by using the received signals, and controls ON and OFF operations of the switch S by applying the control signal to the switch S through an output terminal OUT 1. Also, the control IC 130 includes an Over Voltage Protection (OVP) function in order to prevent an over-voltage situation.

As described above, when the control IC 130 receives a signal synchronized with a waveform of a voltage that is applied to the switch S from the sub-winding circuit 120 through the input terminal IN 1, if a disturbance such as a surge occurs through the input terminal IN 1, an abnormal noise in the input terminal IN 1 induces an abnormal operation of the control IC 130. Therefore, an operation of the SMPS quasi-resonant converter is stopped, since externally the input terminal IN 1 is only connected to a resistor-capacitor (RC) filter 140. This occurs because the RC filter 140 connected to the input terminal IN 1 only blocks high frequencies without blocking a disturbance such as a surge.

Thus, when a disturbance such as a surge occurs in the SMPS quasi-resonant converter of the related art, the control IC cannot properly control operations of the switch of the SMPS quasi-resonant converter.

Embodiments of the invention aim to properly control operation of a switch of a Switched-Mode Power Supply (SMPS) quasi-resonant converter even if a disturbance, such as a surge, is applied to the control circuit.

According to an aspect of the invention, a switch control circuit of a Switched-Mode Power Supply (SMPS) quasi-resonant converter that includes a switch includes a control integrated circuit (IC) to control operation of the switch; a Zener diode connected to an input terminal of the control IC; and a diode connected in series with the Zener diode.

According to an aspect of the invention, a Switched-Mode Power Supply (SMPS) quasi-resonant converter includes a transformer; an output circuit to output power transmitted by the transformer from a primary side of the transformer to a secondary side of the transformer; a switch connected to the primary side of the transformer to control energy charging and transmitting operations of the transformer by switching an input voltage applied to the primary side of the transformer; a sub-winding circuit on the primary side of the transformer; and a switch control circuit to control operation of the switch; wherein the switch control unit includes a control integrated circuit (IC) to control operation of the switch in response to a signal synchronized with a waveform of a voltage that is applied to each end of the switch; a Zener diode connected to an input terminal of the control IC and an anode terminal of the sub-winding circuit; and a diode connected in series with the Zener diode.

According to an aspect of the invention, an input signal processing circuit connected to a control integrated circuit (IC), which is connected to a switch of a Switched-Mode Power Supply (SMPS quasi-resonant converter to control operation of the switch, includes a Zener diode connected to an input terminal of the control IC; and a diode connected in series with the Zener diode.

According to an aspect of the invention, a Switched-Mode Power Supply (SMPS) quasi-resonant converter includes a transformer including a primary winding, a secondary winding, and a sub-winding; a switch connected to the primary winding to apply an input voltage across the primary winding when the switch is closed, and to not apply the input voltage across the primary winding when the switch is open; an output circuit connected to the secondary winding to output an output voltage induced in the secondary winding by repeated applications of the input voltage across the primary winding by the switch; a sub-winding circuit connected to the sub-winding to output a signal synchronized with a waveform of a voltage across the switch induced in the sub-winding by the repeated applications of the input voltage across the primary winding by the switch; a control circuit to close and open the switch in response to the signal synchronized with the waveform of the voltage across the switch output from the sub-winding circuit; and an input signal processing circuit connected to the sub-winding circuit and the control circuit to limit a voltage of the signal synchronized with the waveform of the voltage across the switch output from the sub-winding circuit to a predetermined maximum voltage.

According to an aspect of the invention, operation of the switch of the SMPS quasi-resonant converter can be controlled without producing distortion in an output voltage of the SMPS quasi-resonant converter by inputting a signal in having a waveform that is not distorted to the control IC.

Additional aspects and/or advantages of the invention will be set forth in part in the description that follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a circuit diagram of a Switched-Mode Power Supply (SMPS) quasi-resonant converter of the related art;
FIG. 2 is a circuit diagram of an SMPS quasi-resonant converter according to an aspect of the invention;
FIG. 3 is a circuit diagram of a switch control circuit of an SMPS quasi-resonant converter according to an aspect of the invention;
FIG. 4A shows a waveform of a voltage that is applied to a switch of an SMPS quasi-resonant converter according to an aspect of the invention;
FIG. 4B shows a waveform of a signal that is input to a control integrated circuit (IC) of a switch control circuit when an input signal processing circuit is implemented according to an aspect of the invention;
FIG. 4C shows a waveform of a signal that is input to the control IC of the switch control circuit when an input signal processing circuit is implemented with only a Zener diode, contrary to an aspect of the invention;
FIG. 5A shows a waveform of a voltage that is applied to a switch when controlling operations of the switch with an input signal processing circuit implemented according to an aspect of the invention; and
FIG. 5B shows a waveform of a voltage that is applied to a switch when controlling operations of the switch with an input signal processing circuit implemented with only a Zener diode, contrary to an aspect of the invention.

Reference will now be made in detail to embodiments of the invention, examples of which are shown in the accompanying drawings, wherein like reference numerals refer to like elements throughout. The embodiments are described below in order to explain the invention by referring to the figures.

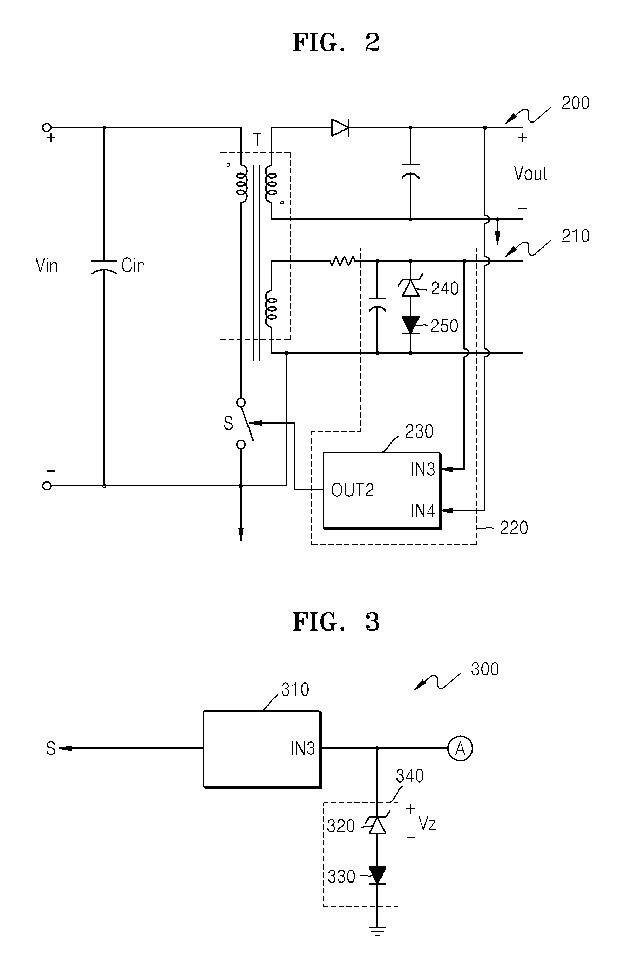

FIG. 2 is a circuit diagram of a Switched-Mode Power Supply (SMPS) quasi-resonant converter according to an aspect of the invention.

Referring to FIG 2, the SMPS quasi-resonant converter includes a transformer T, an output circuit 200 outputting power transmitted from a primary side of the transformer T to a secondary side of the transformer T, a switch S connected to a primary coil of the transformer T controlling energy charging and transmitting operations of the transformer T by switching the input voltage; and a sub-winding circuit 210 of the primary coil of the transformer T, and a switch control unit 220 controlling the switch S.

In the switch control circuit 220, an input terminal IN 3 of a control integrated circuit (IC) 230 is connected to a cathode of a Zener diode 240, an anode of the Zener diode 240 and an anode of a diode 250 are connected in series, and a cathode of the diode 250 is connected to ground. The cathode of the Zener diode 240 is connected to the input terminal IN 3 of the control IC 230, and at the same time is connected to an anode terminal of the sub-winding circuit 210. Even though a noise caused by a disturbance may be applied to the input terminal IN 3, a voltage not exceeding a Zener voltage of the Zener diode 240 is applied to the input terminal IN 3 by connecting the input terminal IN 3 of the control IC 230 to the Zener diode 240 and the diode 250 in series. In other words, if a voltage applied to the input terminal IN 3 is equal to or greater than the Zener voltage of the Zener diode 240, the Zener diode 240 and the diode 250 are turned on, and therefore the Zener voltage of the Zener diode 240 is applied to the input terminal IN 3. Thus, the control IC 230 does not perform abnormal operations because a voltage not exceeding the Zener voltage of the Zener diode is always applied to the control IC 230, even if a disturbance occurs.

The switch S receives a control signal from the control IC 230, and controls energy charging and transmitting operations of the transformer T by switching an input voltage.

FIG. 3 is a circuit diagram of a switch control circuit 300 of the SMPS quasi-resonant converter according to an aspect of the invention.

Referring to FIG. 3, the switch control circuit 300 of the SMPS quasi-resonant converter includes a control IC 310, a Zener diode 320, and a diode 330.

The operation of the control IC 230 shown in FIG. 2 will be described in detail with reference to FIG. 3.

A cathode of the Zener diode 320 is connected to an input terminal IN 3 of the control IC 310, an anode of the Zener diode 320 is connected to an anode of the diode 330, and a cathode of the diode is connected to ground. The anode of the Zener diode 320 and the anode of the diode 330 are connected in series, forming an input signal processing circuit 340.

The control IC 310 receives a signal from an anode terminal A of the sub-winding circuit 210 through the input terminal IN 3. A waveform of a voltage that is applied to the sub-winding circuit 210 has the same waveform as a voltage waveform that is applied to each end of the switch S but has a smaller magnitude, and therefore the input terminal IN 3 of the control IC 310 receives a square-wave signal that is synchronized with a voltage waveform that is applied to each end of the switch S. The control IC 310 generates a control signal by using the received square-wave signal, and controls ON and OFF operations of the switch S by applying the generated control signal to the switch S.

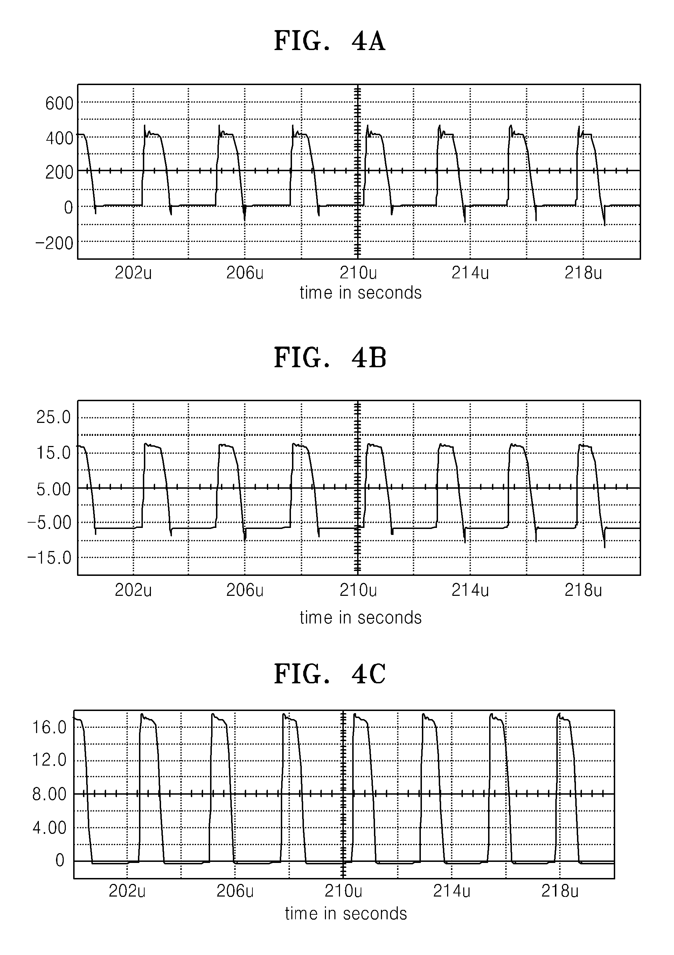

FIG. 4A shows a waveform of a voltage that is applied to the switch S of the SMPS quasi-resonant converter according to an aspect of the invention.

The switch of the SMPS quasi-resonant converter performs ON and OFF operations, and a square-wave voltage is applied to each end of the switch.

FIG. 4B shows a waveform of a signal that is input to a control IC of a switch control circuit when the input signal processing circuit 340 is implemented according to an aspect of the invention.

A signal synchronized with a waveform of the voltage that is applied to each end of the switch, that is, a square-wave signal, is input to an input terminal IN 3 of the control IC 310 of the switch control circuit 300. However, although the waveform of the voltage applied to each end of the switch alternates between a value of "0" and a positive value, an average value of the waveform is not "0", and therefore a waveform of the signal input to the input terminal IN3 has both a negative value and a positive value as shown in FIG. 4B.

A signal input from the switch control circuit 300 to the control IC 310 through the input terminal IN 3 shown in FIG. 3 will be explained in detail with reference to FIG. 4B.

First, when a noise such as a surge is applied to the input terminal IN 3, an inverse voltage that is larger than a breakdown voltage of the Zener diode 320 is applied to the Zener diode 320. In other words, when an inverse voltage that is larger than the Zener voltage is applied to the Zener diode 320, the Zener diode is turned on, and a Zener voltage of the Zener diode 320 is applied to the input terminal IN 3 because of a characteristic of the Zener diode 320 to which the inverse voltage is applied.

Also, when a waveform having a positive value is applied to the input terminal IN 3, a current is not supplied to the Zener diode 320 of the input signal processing circuit 340 that is connected to the input terminal IN 3, and therefore a voltage of the input terminal IN 3 is input to the control IC 310.

When a waveform having a negative value is applied to the input terminal IN 3, a current is blocked by the diode 330 of the input signal processing circuit 340 that is connected to the input terminal IN 3, and therefore a voltage of the input terminal IN 3 is input to the control IC 310.

As described above, according to an aspect of the invention, an input signal processing circuit 340 connected to the input terminal IN 3 of the switch control circuit 300 is composed of a Zener diode 320 and a diode 330 that is connected in series with the Zener diode 320, so that an input signal input to the input terminal IN 3 can be input to the control IC 310 without distortion. Accordingly, the control IC 310 can accurately control the ON and OFF operations of the switch S.

According to an aspect of the invention, a Zener diode 320 and a diode 330 are included in the input signal processing circuit 340 so as to process a signal input to the control IC 310 of the switch control circuit 300. However, a problem as described below occurs when only the Zener diode 320 is included in the input signal processing circuit 340, contrary to an aspect of the invention.

FIG. 4C shows a waveform of a signal that is input to the control IC 310 of the switch control circuit 300 when the input signal processing circuit 340 is implemented with only the Zener diode 320, contrary to an aspect of the invention.

A waveform of a signal that is input to the control IC when the input signal processing circuit 340 is implemented with only the Zener diode 320, contrary to an aspect of the invention, will be explained with reference to FIG. 4C.

When a waveform having a positive value is applied to the input terminal IN 3, a current is not supplied to the Zener diode 320 of the input signal processing circuit 340 implemented with only the Zener diode 320 that is connected to the input terminal IN 3, and therefore a voltage of the input terminal IN 3 is input to the control IC 310. Accordingly, distortion of the waveform does not occur.

However, when a waveform having a negative value is applied to the input terminal IN 3, a current is not blocked because the input signal processing circuit 340 implemented with only the Zener diode 320 does not include the diode 330, and the Zener diode 320 is turned on and thus is connected to ground, and a value of "0" is applied to the input terminal IN 3. Accordingly, negative values of a waveform of a signal that is input to the control IC 310 are "0," unlike an input signal that is applied to the input terminal IN 3. In other words, distortion of the waveform occurs. Thus, when the input signal processing circuit 340 includes only the Zener diode 320, a waveform having a negative value is distorted. Referring to FIG. 4C, all waveforms having a negative value are distorted to "0." Thus, when the input signal processing circuit 340 only includes the Zener diode 320, a distorted waveform is input to the control IC 310 as shown in FIG. 4C, and therefore the control IC 310 cannot properly control operations of the switch S.

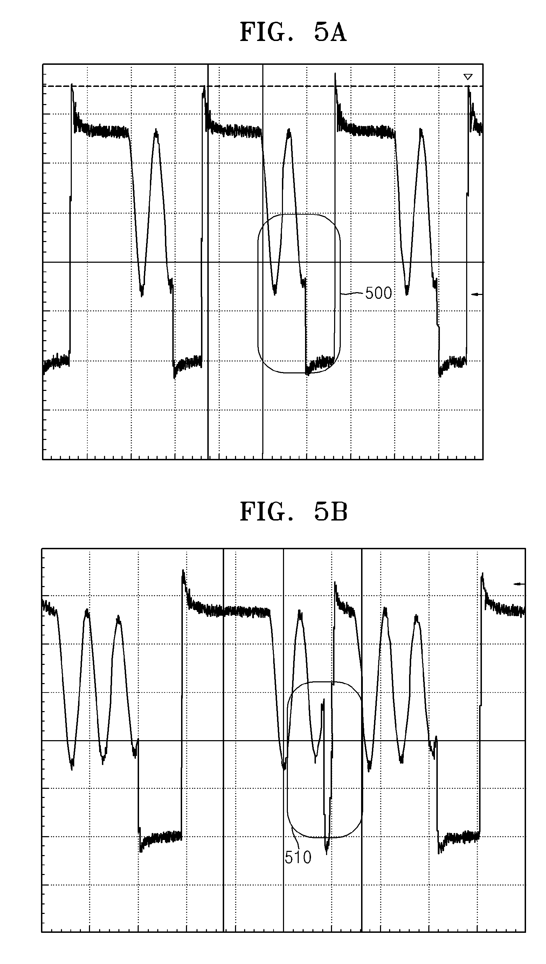

FIG. 5A shows a waveform of a voltage that is applied to the switch S when controlling operations of the switch S with the input signal processing circuit 340 according to an aspect of the invention, and FIG. 5B shows a waveform of a voltage that is applied to the switch S when controlling operations of the switch S with an input signal processing circuit implemented with only a Zener diode, contrary to an aspect of the invention.

Referring to FIG. 5A, when an input signal without distortion as shown in FIG. 4B is input to the control IC 310 through the input terminal IN 3, the control IC 310 controls ON and OFF operations of the switch S by extracting a lowest point of a waveform of a voltage that is applied to the switch S, and therefore distortion does not occur in a waveform of a voltage that is applied to the switch S as shown in the lowest portion 500 shown in FIG. 5A.

However, when a distorted input signal as shown in FIG. 4C is input to the control IC 310 through the input terminal IN 3, the control IC 310 cannot extract the lowest point of a waveform applied to the switch S. In other words, the control IC 310 needs to control the ON operation by using a lowest point extracted from the waveform. However, since in this case the control IC 310 controls the ON operation without being able to extract an exact lowest point, distortion occurs in a waveform of a voltage that is applied to the switch S as shown in the lowest portion 510 in FIG. 5B.

Although embodiments of the invention have been described above as using the Zener diodes 240 and 320, any other voltage clamping device that can clamp an input voltage to a maximum predetermined voltage may be used instead of the Zener diodes 240 and 320, such an avalanche diode, a transil, or a transient voltage suppression diode.

Also, although embodiments of the invention have been described above as using the input signal processing circuit 340 including the Zener diode 320 and the diode 330, the input signal processing circuit 340 may also include one or more other elements to provide a desired operating characteristic, such as a resistor, a capacitor, or an inductor.

Although several embodiments of the invention have been shown and described, it would be appreciated by those skilled in the art that changes may be made in these embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A switch control circuit of a Switched-Mode Power Supply (SMPS) quasi-resonant converter, the SMPS quasi-resonant converter comprising a switch (S), the switch control circuit comprising:
a control integrated circuit (IC) (230) to control operation of the switch;
a Zener diode (240) connected to an input terminal of the control IC; and
a diode (250) connected in series with the Zener diode (240).

2. The switch control circuit of claim 1, wherein:
a cathode of the Zener diode (240) is connected to the input terminal of the control IC (230);
an anode of the Zener diode is connected to an anode of the diode (250); and
a cathode of the diode (250) is connected to a ground.

3. The switch control circuit of claim 1 or 2, wherein the control IC (230) controls the operation of the switch (S) in response to a signal synchronized with a waveform of a voltage that is applied to each end of the switch.

4. The switch control circuit of claim 3, wherein the signal is a square-wave signal having a predetermined period.

5. A Switched-Mode Power Supply (SMPS) quasi-resonant converter comprising:
a transformer (T);
an output circuit (200) to output power transmitted by the transformer from a primary side of the transformer to a secondary side of the transformer;
a switch (S) connected to the primary side of the transformer to control energy charging and transmitting operations of the transformer by switching an input voltage applied to the primary side of the transformer;
a sub-winding circuit (210) on the primary side of the transformer; and
a switch control circuit (220) to control operation of the switch (S);
wherein the switch control unit comprises:
a control integrated circuit (IC) (230) to control operation of the switch in response to a signal synchronized with a waveform of a voltage that is applied to each end of the switch,
a Zener diode (240) connected to an input terminal of the control IC (230) and an anode terminal of the sub-winding circuit (210), and
a diode (250) connected in series with the Zener diode (240).

6. The SMPS quasi-resonant converter of claim 5, wherein:
a cathode of the Zener diode (240) is connected to the input terminal of the control IC (230);
an anode of the Zener diode (240) is connected to an anode of the diode (250); and
a cathode of the diode (250) is connected to a ground.

7. The SMPS quasi-resonant converter of claim 5 or 6, wherein the signal is a square-wave signal having a predetermined period.

8. An input signal processing circuit connected to a control integrated circuit (IC) (230), the control IC being connected to a switch (S) of a Switched-Mode Power Supply (SMPS) quasi-resonant converter to control operation of the switch, the input signal processing circuit comprising:
a Zener diode (240) connected to an input terminal of the control IC (230); and
a diode (250) connected in series with the Zener diode (240).

9. The input signal processing circuit of claim 9, wherein:
a cathode of the Zener diode (240) is connected to the input terminal of the control IC (230);
an anode of the Zener diode (240) is connected to an anode of the diode (250); and
a cathode of the diode (250) is connected to a ground.

10. A Switched-Mode Power Supply (SMPS) quasi-resonant converter comprising:
a transformer (T) comprising a primary winding, a secondary winding, and a sub-winding;
a switch (S) connected to the primary winding to apply an input voltage across the primary winding when the switch is closed, and to not apply the input voltage across the primary winding when the switch is open;
an output circuit (200) connected to the secondary winding to output an output voltage induced in the secondary winding by repeated applications of the input voltage across the primary winding by the switch;
a sub-winding circuit (210) connected to the sub-winding to output a signal synchronized with a waveform of a voltage across the switch induced in the sub-winding by the repeated applications of the input voltage across the primary winding by the switch;
a control circuit (220) to close and open the switch (S) in response to the signal synchronized with the waveform of the voltage across the switch output from the sub-winding circuit; and
an input signal processing circuit (340) connected to the sub-winding circuit and the control circuit to limit a voltage of the signal synchronized with the waveform of the voltage across the switch output from the sub-winding circuit to a predetermined maximum voltage.

11. The SMPS quasi-resonant converter of claim 10, wherein the control circuit (220) opens and closes the switch (S) in response to the signal synchronized with the waveform of the voltage across the switch output from the sub-winding circuit (210) and the output voltage output from the output circuit (200).

12. The SMPS quasi-resonant converter of claim 10 or 11, wherein the input signal processing circuit comprises a voltage clamping device to clamp the voltage of the signal synchronized with the waveform of the voltage across the switch output from the sub-winding circuit (210) to the predetermined maximum voltage.

13. The SMPS quasi-resonant converter of claim 12, wherein the voltage clamping device is a Zener diode (240).

14. The SMPS quasi-resonant converter of claim 12 or 13, wherein the input signal processing circuit further comprises a diode (250) connected in series with the voltage clamping device.

15. The SMPS quasi-resonant converter of claim 14, wherein the voltage clamping device is a Zener diode (240).

16. The SMPS quasi-resonant converter of any of claims 10-15, wherein the sub-winding circuit (210) comprises an output terminal to output the signal synchronized with the waveform of the voltage across the switch (S);
wherein the control circuit (220) comprises an input terminal connected to the output terminal of the sub-winding circuit to receive the signal synchronized with the waveform of the voltage across the switch; and
wherein the input signal processing circuit (340) is connected to the input terminal of the control circuit.

17. The SMPS quasi-resonant converter of claim 16, wherein the input signal processing circuit comprises a voltage clamping device (320) to clamp the voltage of the signal synchronized with the waveform of the voltage across the switch output from the sub-winding circuit to the predetermined maximum voltage.

18. The SMPS quasi-resonant converter of claim 17, wherein the voltage clamping device (320) comprises:
a cathode terminal connected to the input terminal of the control circuit; and
an anode terminal; and
wherein the input signal processing circuit further comprises a diode (330) comprising:
an anode terminal connected to the anode terminal of the voltage clamping device; and
a cathode terminal connected to a ground.

19. The SMPS quasi-resonant converter of claim 18, wherein the voltage clamping device is a Zener diode (320).

20. The SMPS quasi-resonant converter of claim 18 or 19, wherein the output terminal of the sub-winding circuit (210) is an anode terminal.
